# EUROPÄISCHE PATENTANMELDUNG

(11) **EP 0 970 879 A2**
(43) Veröffentlichungstag der Anmeldung: **12.01.2000**
(21) Anmeldenummer: 99113566.6
(22) Anmeldetag: 07.07.1999
(51) Int. Cl.: B62D 39/00

(54) **Sicherheitsfahrwerk für Kraftfahrzeuge**

(30) Priorität: 08.07.1998 DE 19830423
(71) Anmelder: IVM Engineering AG, 6343 Rotkreuz (CH)
(72) Erfinder: Kiss, Julius, Dipl.-Ing., 1100 Wien (AT)
(74) Vertreter: Helms, Joachim, Dipl.-Ing. Patentanwalt

(57) **Zusammenfassung**

Sicherheitsfahrwerk für Kraftfahrzeuge, insbesondere für Kleinfahrzeuge mit einer Fahrgastzelle (12), umfassend
- einen im gesamten Frontbereich der Fahrgastzelle schräg nach oben verlaufenden Fahrzeugboden (14),
- zwei unterhalb dieses Frontbereichs an Sicherheitsträgern (18) mittels Längsträgern (20) angebrachte Vorderräder (16), und
- eine vor den Vorderrädern (16) angeordneten mit der Vorderkante (24) der Fahrgastzelle (12) und den Längsträgern (20) verbundenen Prallplatte (22) mit einer Sollbruchstelle (26).

## Beschreibung

Die Erfindung betrifft ein Sicherheitsfahrwerk für Kraftfahrzeuge, insbesondere Kleinfahrzeuge, gemäß dem Oberbegriff des Anspruch 1.

Zur Erhöhung der Sicherheit der Fahrgäste in einem Kraftfahrzeug bei einem Aufprall ist es bekannt, durch Verformungszonen, Solibruchstellen usw. die Aufprallenergie zu vernichten und die Fahrgastzelle im wesentlichen nicht zu beschädigen. Sicherheitsgurte und Airbags dienen zur weiteren Sicherheit der Fahrgäste.

So ist es z.B. aus der US-PS 5 564 745 bekannt, einen Hauptrahmen vorzusehen, der sich in seinem vorderen und hinteren Bereich verjüngt und korrespondierende Seitenrahmen für die Vorder- und Hinterräder aufweist. Die Seitenrahmen sind mittels Sollbruchstellen mit dem Hauptrahmen verbunden, die bei einem Aufprall zerstört werden und so einen Teil der Aufprallenergie vernichten.

Aus der US-PS 4 826 209 ist es bekannt, ein Chassis vorzusehen, an dessen vorderen Bereich zwei gelenkig miteinander verbundene Träger vorgesehen sind. Bei einem Aufprall dreht sich der vordere Träger gegenüber den angelenkten Trägern in einer ersten Richtung, während sich der Rest des Fahrzeugs gegenüber dem angelenkten Träger in einer entgegengesetzten Richtung dreht. Auf diese Weise wird die Aufprallenergie teils durch Verformung des Frontbereichs und teils durch Umsetzung in eine Rotationsbewegung vernichtet.

Diese Sicherheitssysteme sind jedoch nur für relativ große Fahrzeuge geeignet. Bei Kleinfahrzeugen fehlt es an dem erforderlichen Raum, um derartige Sicherheitssysteme einzubauen.

Es ist daher Aufgabe der vorliegenden Erfindung, ein Sicherheitsfahrwert für Kraftfahrzeuge, insbesondere für Kleinfahrzeuge der eingangs genannten Art zu schaffen, mit dem bei einem Aufprall ein großer Teil der Aufprallenergie vernichtet wird.

Diese Aufgabe wir durch die in Anspruch 1 gekennzeichnete Erfindung gelöst. D.h., es wird ein Sicherheitsfahrwerk für Kraftfahrzeuge, insbesondere für Kleinfahrzeuge mit einer Fahrgastzelle geschaffen, das gekennzeichnet ist durch
- einen im gesamten Frontbereich der Fahrgstzelle schräg nach oben verlaufenden Fahrzeugboden,
- zwei unterhalb dieses Frontbereichs an Sicherheitsträgern mittels Längsträgern angebrachte Vorderräder, und
- eine vor den Vorderrädern angeordneten mit der Vorderkante der Fahrgastzelle und den Längsträgern verbundenen Prallplatte mit einer Sollbruchstelle.

Mit den erfindungsgemäßen Sicherheitsfahrwerk werden bei einem Aufprall nach der Zerstörung der Prallplatte die Vorderräder unter den schräg nach oben verlaufenden Fahrzeugboden geschoben, wodurch die Fahrgastzelle angehoben wird und sich auf oder über das kollidierende Fahrzeug schiebt. Hierdurch werden die frontal wirkenden Aufprallkräfte in eine Rotationsbewegung des Fahrzeugs um seine Hinterräder umgewandelt.

Vorteilhafte Ausgestaltungen der Erfindung ergeben sich aus den Unteransprüchen.

So ist vorgesehen, daß der Fahrzeugboden im Frontbereich in einem Winkel von ca. 25°-45° nach oben verläuft.

Dieser Winkelbereich gewährleistet, je nach Reifengröße, die Bewegung der Vorderräder unter den Fahrzeugboden, wobei die Vorderräder ebenfalls einen Teil der Aufprallenergie absorbieren.

In weiterer vorteilhafter Ausgestaltung der Erfindung ist vorgesehen, daß der Sicherheitsträger jeweils mit dem vom Längsträger abgewandten Ende schwenkbar mit der Fahrgastzelle verbunden ist.

Dies ermöglicht eine ausreichend große Schwenkbewegung der Vorderräder bei einem Aufprall.

Eine weitere vorteilhafte Ausgestaltung der Erfindung sieht vor, daß der Sicherheitsträger in seinem mittleren Bereich durch einen Materialblock verlaüft.

Ein derartiger Materialblock stabilisiert im Normalzustand den Sicherheitsträger und dient im Fall eines Aufpralls als weiteres Energie absorbierendes Element. Ein vorteilhaftes Material für den Materialblock ist z.B. Kunststoff, wie Polyurethan oder ähnl. und/oder eine Wabenstruktur. Wesentlich für die Materialwahl ist zum einen die Festigkeit im Normalbetrieb und zum anderen die Möglichkeit der Energieaufnahme durch Zerstörung im Fall eines Aufpralls. Es ist ebenfalls denkbar, eine teleskopierbare Trägerkonstruktion vorzusehen, die sich beim Überschreiten eines Schwellwertes zusammenschiebt, wie dies z.B. in der US-PS 5 752 718 beschrieben ist.

Gemäß einer weiteren vorteilhaften Ausgestaltung der Erfindung ist vorgesehen, daß im Bereich der Hinterräder ein quer über die Rückseite der Fahrgastzelle verlaufender, gegen die Fahrbahn verschwenkbarer Stützbügel vorgesehen ist.

Eine derartige Konstruktion verhindert ein Umkippen des Fahrzeugs nach einem Aufprall, insbesondere bei einem Kleinfahrzeug, daß nur ein Hinterrad oder zwei eng nebeneinander angeordnete Hinterräder aufweist. Dabei kann der Stützbügel mit der Fahrgastzelle verrastbar und mittels einer Feder in Richtung der Fahrbahn vorgespannt sein, so daß er sich bei einem Aufprall oder einer Schräglage des Fahrzeugs automatisch löst und das Fahrzeug gegen die Fahrbahn abstützt.

Dabei ist der Stützbügel gemäß einer weiteren vorteilhaften Ausgestaltung der Erfindung auf seiner der Fahrbahn zugewandten Seite mit einem Bremsbelag versehen, so daß beim Abstützen gleichzeitig die Geschwindigkeit verringert wird.

Ein Ausführungsbeispiel der vorliegenden Erfindung ist in der Zeichnung dargestellt und wird im folgenden näher beschrieben. Es zeigen:
Fig. 1. eine schematische Seitenansicht eines Kleinfahrzeugs mit dem Sicherheitsfahrwerk;
Fig. 2 eine schmatische Seitenansicht eines Kleinfahrzeugs mit dem Sicherheitsfahrwerk in einer ersten Phase eines Aufpralls;
Fig. 3 eine schmatische Seitenansicht eines Kleinfahrzeugs mit dem Sicherheitsfahrwerk in einer zweiten Phase eines Aufpralls; und
Fig. 4 eine schmatische Seitenansicht eines Kleinfahrzeugs mit dem Sicherheitsfahrwerk in einer dritten Phase eines Aufpralls.

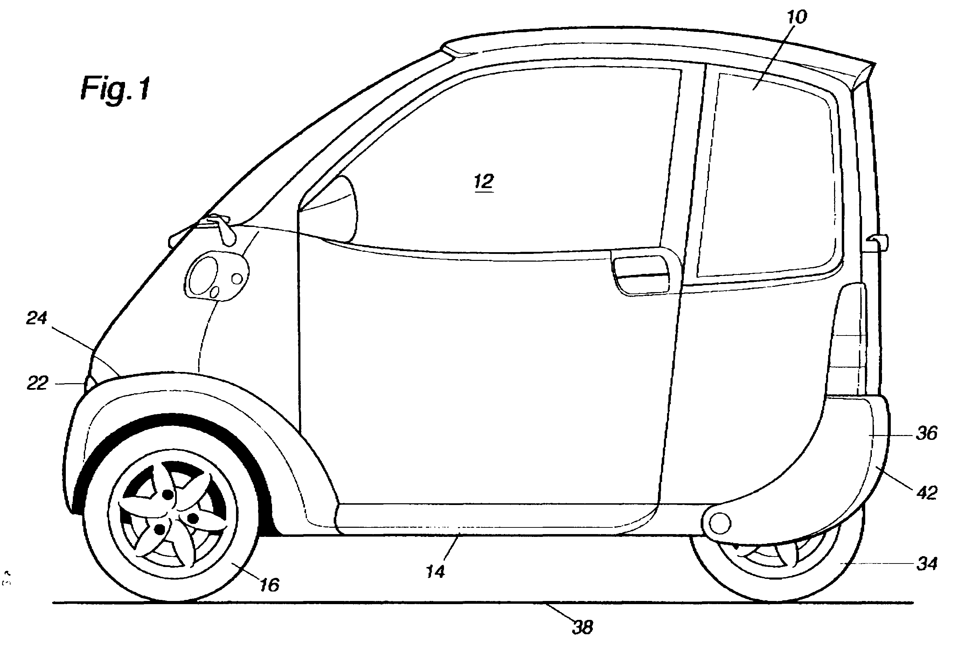

Bei dem in Fig. 1 dargestellten Kraftfahrzeug 10 handelt es sich um einen Kleinwagen für den Stadtverkehr mit einer Länge von ca. 2m. Um bei einem derartigen Fahrzeug die notwendige Sicherheit zu gewährleisten, besteht die Fahrgastzelle 12 aus einem Kuststoff-Composit, wie z.B. Sandwich-Bauteilen, die ein geringes Gewicht und dennoch eine hohe Festigkeit aufweisen, wie es z.B. bei Monococks von Formel-I Fahrzeugen bekannt ist.

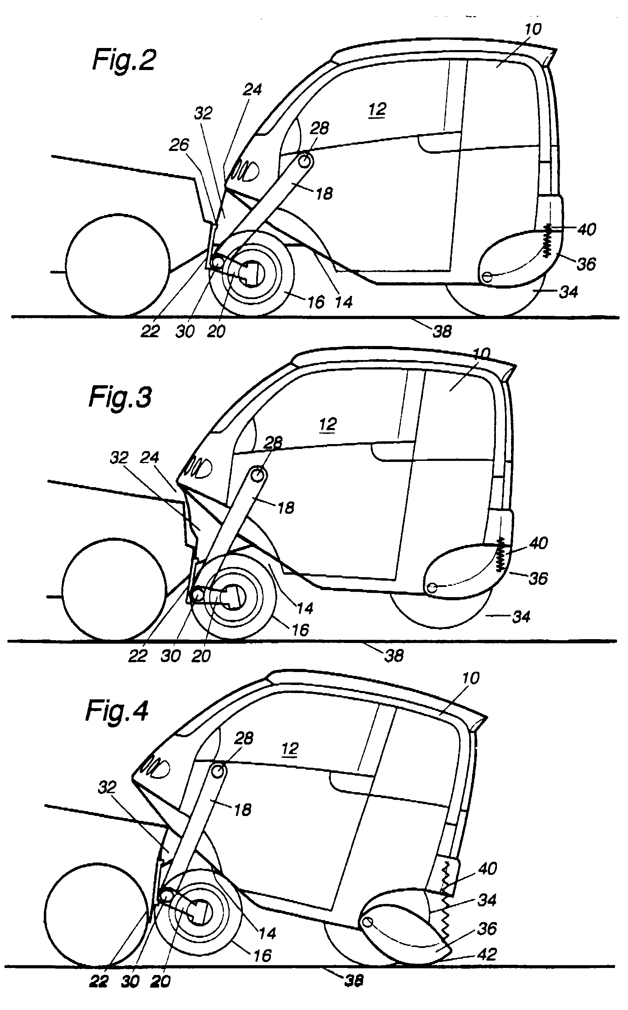

Wie in den Fig.2 bis 4 dargestellt, weist die Fahrgastzelle 12 einen im gesamten Frontbereich schräg nach oben, in einem Winkelbereich von ca. 25° - 45° verlaufenden Fahrzeugboden 14 auf.

Unterhalb dieses Frontbereichs sind die Vorderräder 16 des Fahrzeugs angeordnet. Die Vorderräder 16 sind an Sicherheitsträgern 18 mittels Längsträgern 20 befestigt. Vor den Vorderrädern 16 befindet sich eine Prallplatte 22, die an einen Ende der Längsträger 20 befestigt ist und sich bis in den Bereich der Vorderkante 24 der Fahrgastzelle erstreckt und dort ebenfalls befestigt ist. Die Prallplatte 22 weist eine sich quer über die Fahrzeugbreite erstreckende Sollbruchstelle 26 auf. Der Sicherheitsträger 18 erstreckt sich von dem Längsträger 20 bis zu einem mittleren Bereich der Fahrgstzelle 12 und ist dort schwenkbar mit der Fahrgastzelle 12 verbunden. Zwischen dem Schwenkpunkt 28 an der Fahrgastzelle 12 und dem Anlenkpunkt 30 an den Längsträger 20 ist im mittleren Bereich des Sicherheitsträgers 18 ein zerstörbarer oder zerspleißbarer Materialblock 32 vorgesehen, in dem der Sicherheitsträger 18 geführt ist. Der Materialblock 32 erstreckt sich in den Hohlraum zwischen dem schrägen Fahrzeugboden 14 und den Vorderrädern 16. Er besteht vorzugsweise aus Kunststoff und/oder einer Wabenstruktur.

Auf der Rückseite der Fahrgastzelle weist das Sicherheitsfahrgestell im Bereich der Hinterräder 34 einen quer über die Fahrzeugbreite verlaufenden Stützbügel 36 auf, der gegen den Boden bzw. die Fahrbahn 38 verschwenkbar ist, wie dies in Fig. 4 dargestellt ist. Der Stützbügel 36 ist mit der Fahrgastzelle 12 verrastbar und mittels einer Feder 40 oder ähnlichem in Richtung der Fahrbahn 38 vorgespannt. Die Auslösung des Stützbügels 36 erfolgt in Abhängigkeit von der Fahrzeugneigung entweder in Längsrichtung oder in Querrichtung. Auf der der Fahrbahn 38 zugewandten Seite ist der Stützbügel 36 mit einem Bremsbelag 42 versehen.

Erfolgt bei dem Fahrzeug 10 mit dem beschriebenen Sicherheitsfahrwerk ein Aufprall, so wird zuerst die Sollbruchstelle 26 der Prallplatte 22 zerstört. Hierdurch wird der Sicherheitsträger 18 freigegeben. Bei einer weiteren Aufprallbewegung stützt sich die Prallplatte 22 am gegnerischen Fahrzeug ab, und bewegt den Sicherheitsträger 18 zusammen mit den Vorderrädern 16 nach hinten unter den Fahrzeugboden 14. Hierbei wird der Widerstand des Materialblocks 32 überwunden und selbiger zerstört. Eine weitere Bewegung der Vorderräder 16 unter den Fahrzeugboden 14 führt zu einer Anhebung der Fahrgastzelle 12 auf oder über das gegenerische Fahrzeug. Wenn die Längs- oder Querneigung der Fahrgastzelle 12 einen bestimmten Wert überschreitet, bei dem die Vorderräder 16 den Fahrbahnkontakt verlieren, wird der hintere Stützbügel 36 ausgelöst, um ein Umkippen des Fahrzeugs zu verhindern.

Das beschriebene Sicherheitsfahrwerk benötigt einen relativ kleinen Sicherheitsraum, so daß es insbesondere für Kleinfahrzeuge ohne entsprechende Verformungszonen und ähnl. geeignet ist.

## Patentansprüche

1. Sicherheitsfahrwerk für Kraftfahrzeuge, insbesondere für Kleinfahrzeuge mit einer Fahrgastzelle, **gekennzeichnet durch**
- einen im gesamten Frontbereich der Fahrgastzelle (12) schräg nach oben verlaufenden Fahrzeugboden (14) ,
- zwei unterhalb dieses Frontbereichs an Sicherheitsträgern (18) mittels Längsträgern (20) angebrachte Vorderräder (16), und
- eine vor den Vorderrädern (16) angeordneten mit der Vorderkante (24) der Fahrgastzelle (12) und den Längsträgern (20) verbundenen Prallplatte (22) mit einer Sollbruchstelle (26).

2. Sicherheitsfahrwerk für Kraftfahrzeuge nach Anspruch 1, **dadurch gekennzeichnet**, daß der Fahrzeugboden (14) in einem Winkel vo ca. 25° - 45° nach oben verläuft.

3. Sicherheitsfahrwerk für Kraftfahrzeuge nach Anspruch 1 oder 2**, dadurch gekennzeichnet**, daß der Sicherheitsträger (18) jeweils mit dem vom Längsträger (20) abgewandten Ende schwenkbar mit der Fahrgastzelle (12) verbunden ist.

4. Sicherheitsfahrwerk für Kraftfahrzeuge nach einem der Ansprüche 1 bis 3**, dadurch gekennzeichnet**, daß der Sicherheitsträger (18) in seinem mittleren Bereich durch einen Materialblock (32) verläuft.

5. Sicherheitsfahrwerk für Kraftfahrzeuge nach einem der Ansprüche 1 bis 4, **dadurch gekennzeichnet**, daß der Materialblock (32) aus Kuststoff, wie z.B. Polyurthan und/oder einer Wabenstruktur besteht.

6. Sicherheitsfahrwerk für Kraftfahrzeuge nach einem der Ansprüche 1 bis 5**, dadurch gekennzeichnet**, daß im Bereich der Hinterräder (34) ein quer über die Rückseite der Fahrgastzelle (12) verlaufender, gegen eine Fahrbahn (38) verschwenkbarer Stützbügel (36) vorgesehen ist.

7. Sicherheitsfahrwerk für Kraftfahrzeuge nach einem der Ansprüche 1 bis 6, **dadurch gekennzeichnet**, daß der Stützbügel (36) mit der Fahrgastzelle (12) verrastbar und mittels einer Feder (40) in Richtung der Fahrbahn (38) vorgespannt ist

8. Sicherheitsfahrwerk für Kraftfahrzeuge nach einem der Ansprüche 1 bis 7, **dadurch gekennzeichnet**, daß der Stützbügel (36) auf seiner der Fahrbahn (38) zugewandten Seite mit einem Bremsbelag versehen (42) ist.
